# EUROPÄISCHE PATENTANMELDUNG

(11) **EP 2 093 001 A1**
(43) Veröffentlichungstag der Anmeldung: **26.08.2009**
(21) Anmeldenummer: 09153118.6
(22) Anmeldetag: 18.02.2009
(51) Int. Cl.: B23B 49/00, B23B 51/10

(54) **Drehantreibbares Werkzeug mit axial verstellbarer Anschlaghülse, insbesondere Senker**

(30) Priorität: 19.02.2008 DE 102008009897; 09.05.2008 DE 102008022968
(71) Anmelder: wolfcraft GmbH, 56746 Kempenich (DE)
(72) Erfinder: Ebert, Winfried, 56745 Weibern (DE); Keuler, Klaus, 56651 Niederzissen (DE); Ring, Peter, 56745 Bell (DE)
(74) Vertreter: Grundmann, Dirk

(57) **Zusammenfassung**

Die Erfindung betrifft ein drehantreibbares Werkzeug, mit einem um eine Drehachse (1) drehantreibbaren Kernteil (2), welches an einem axialen Ende einen Antriebsabschnitt (3) und am anderen axialen Ende einen Arbeitsabschnitt (4) und einen zwischen diesen Abschnitten (3, 4) angeordneten Befestigungsabschnitt (5) für eine Stellhülse (15) aufweist, die mittels eines Feststellorgans (17, 31) in unterschiedlichen Axialstellungen am Kernteil (2) befestigt ist und die an ihrer zum Arbeitsabschnitt (4) hinweisenden Seite eine im Wesentlichen zylindrische Wandung (24) aufweisende Anschlaghülse (22) trägt, die bereichsweise den Arbeitsabschnitt (4) übergreift und sich mit dem drehenden Kernteil (2) mitdreht. Zur gebrauchsvorteilhaften Weiterbildung, wird vorgeschlagen, dass die Wandung (24) der Anschlaghülse (22) ein oder mehrere Fenster (23) aufweist, wobei das Fenster bei sich drehender Anschlaghülse (22) eine einen freien Blick auf den Arbeitsabschnitt (4) erlaubende, durchsichtige Axialzone erscheinen lässt.

## Beschreibung

Die Erfindung betrifft ein drehantreibbares Werkzeug, mit einem um eine Drehachse drehantreibbaren Kernteil, welches an einem axialen Ende einen Antriebsabschnitt und am anderen axialen Ende einen Arbeitsabschnitt und einen zwischen diesen Abschnitten angeordneten Befestigungsabschnitt für eine Stellhülse aufweist, die mittels eines Feststellorgans in unterschiedlichen Axialstellungen am Kernteil befestigt ist und die an ihrer zum Arbeitsabschnitt hinweisenden Seite eine im Wesentlichen zylindrische Wandung aufweisende Anschlaghülse trägt, die bereichsweise den Arbeitsabschnitt übergreift und sich mit dem drehenden Kernteil mitdreht.

Aus der DE 101 54 434 B4 ist eine Anschlagvorrichtung bekannt. Ein Kernteil besitzt einen Einspannabschnitt zum Einspannen in ein Futter einer Bohrmaschine. An diesen Antriebsabschnitt schließt sich ein Befestigungsabschnitt an, auf welchem ein Drehlager sitzt. Mittels des Drehlagers ist eine Anschlaghülse am Kernteil befestigt. Das Kernteil besitzt eine axiale Bohrung, in die ein Schaft eines Bohrers eingesteckt werden kann. Er wird dort mittels einer Madenschraube gehalten. Auf dem Bohrer ist ein Arbeitsabschnitt aufgesteckt. Dieser wird von einem Senker gebildet. Der Senker ist ebenfalls mit einer Madenschraube am Bohrer befestigt.

Die DE 25 49153 A1 beschreibt ein Vorsatzgerät für Handbohrmaschinen zum Eindrehen von Schrauben. Ein Schraubendreherbit ist in eine Mehrkanthöhlung eines Arbeitsabschnittes eingesteckt. Ein Antriebsabschnitt wird von einem Schaft ausgebildet, der in das Futter einer Bohrmaschine eingesteckt werden kann. Auf einem zwischen Arbeitsabschnitt und Antriebsabschnitt angeordneten, einen Befestigungsabschnitt ausbildenden Gewindeabschnitt ist eine Stellhülse aufgeschraubt, die dort mittels einer Kontermutter fixiert ist. Das StirnEnde der Stellhülse bildet eine Anschlaghülse aus, die ebenso wie die Hülse der vorbeschriebenen DE 101 54 434 B4 einen Tiefenanschlag ausbildet.

Einen ähnlichen Bithalter beschreibt die EP 163 37 285 A1. Dort ist im vorderen Bereich der Anschlaghülse zusätzlich ein Permanent-Magnet angeordnet.

Eine derartige Magnetanordnung beschreibt auch die DE 199 07 837 A1, bei der die auf ein Außengewinde eines Bithalters aufgeschraubte kombinierte Stell-Anschlagshülse von einer Kontermutter unter Zwischenlage eines Gummirings fixiert ist.

Der Erfindung liegt die Aufgabe zugrunde, ein eingangs genanntes Werkzeug gebrauchsvorteilhaft weiterzubilden.

Gelöst wird die Aufgabe durch die in den Ansprüchen angegebene Erfindung, wobei jeder Anspruch eine eigenständige Lösung der Aufgabe darstellt und mit jedem anderen Anspruch kombinierbar ist.

Zunächst und im Wesentlichen ist vorgesehen, dass die Wandung der Anschlaghülse ein oder mehrere Fenster aufweist. Diese Fenster sind so angeordnet, dass sie bei sich drehender Anschlaghülse eine durchsichtige Axialzone erscheinen lassen. Diese durchsichtige Axialzone erlaubt einen freien Blick auf den Arbeitsabschnitt. Bevorzugt sind im Bereich der zylindrischen Wandung mehrere Fenster angeordnet. Die mehreren Fenster können in Umfangsrichtung und gleichmäßiger Winkelverteilung angeordnet sein. Sie können aber auch auf unterschiedlichen Axialhöhen liegen. In einer bevorzugten Ausgestaltung ist das eine oder mehrere Fenster zu dem Arbeitsabschnitt zugeordneten Rand der Anschlaghülse hin randoffen. Bevorzugt verläuft der Rand des Fensters auf einer U-förmigen Konturlinie. Die Umfangsweite der Fenster entsprechen vorzugsweise der Umfangsweite der Fensterzwischenräume. In einer besonders bevorzugten Ausgestaltung besitzt die Anschlagshülse drei oder vier stirnseitige Einschnitte, zwischen denen jeweils undurchsichtige Fensterzwischenräume angeordnet sind. Diese Einschnitte bilden die bereits erwähnten randoffenen Fenster aus. Die Anschlaghülse wird von dem drehangetriebenen Kernteil über die Stellhülse drehmitgeschleppt. Die Anschlaghülse kann auch derart mit der Stellhülse verbunden sein, dass eine ggf. auch schwergängige Relativdrehbarkeit zwischen Anschlaghülse und Stellhülse gegeben ist. Bevorzugt ist die Anschlaghülse aber derartig auf die Stellhülse aufgepresst, dass sie unverlierbar dort befestigt ist. Letzteres erfolgt dadurch, dass die Verbindung zwischen Stellhülse und Anschlaghülse von einem, nur durch Zerstörung aufhebbaren Formschluss gebildet ist. Trifft die vordere, randoffene Stirnkante der Anschlaghülse gegen ein Werkstück, so wird die Anschlaghülse abgebremst, während sich die fest mit dem Kernteil verbundene Stellhülse weiterdrehen kann. Die Anschlaghülse ist bevorzugt aus Kunststoff befestigt und sitzt auf einem Kragen der Stellhülse. Sie ist auf einen rohrförmigen Fortsatz der Stellhülse aufgepresst. Die Stellhülse wird bevorzugt mittels einer Madenschraube oder einer Kontermutter am Kernteil befestigt. Zur formschlüssigen Fesselung der Stellhülse am Kernteil kann das Kernteil Abflachungen aufweisen. Bevorzugt besitzt die Stellhülse ein Innengewinde, mit dem sie auf ein Außengewinde des Befestigungsabschnitts des Kernteils aufgeschraubt ist. Dieses Außengewinde besitzt eine oder mehrere Abflachungen, wobei die Abflachungen bezogen auf den Querschnitt des Kernteiles entlang der Seiten eines Mehrecks verlaufen. Bei dem Mehreck handelt es sich bevorzugt um ein gleichseitiges Mehreck und insbesondere um ein Dreieck. Der Arbeitsabschnitt wird bevorzugt von mehreren, auf einer Kegelfläche um die Drehachse verlaufenden Schneidkanten gebildet. Der Kegelöffnungswinkel liegt zwischen 20° und 60°. Zwischen den einzelnen Schneiden erstrecken sich Spankehlen. Mit dem derart ausgebildeten Senker können Senkungen verschiedener Tiefe gefertigt werden, wobei die Tiefe der Senkungen durch die Axiallage der Stellhülse definiert ist. Die Tiefe der Senkung entspricht dem über die vordere Randkante der Anschlaghülse hinausragenden Abschnitt der Arbeitsspitze. Der Antriebsabschnitt wird von einem Einspannschaft ausgebildet, mit dem das Kernteil in das Futter einer Bohrmaschine eingespannt werden kann. Der Einspannabschnitt kann ein Sechskant sein, in die der Schaft des Bohrers eingesteckt werden kann. Der Einspannschaft kann ein Sechskantprofil aufweisen, so dass es in eine Sechskanthöhlung eines Bithalters eingesteckt werden kann. In einer Variante der Erfindung ist vorgesehen, dass das Kernteil mit einem Bohrer kombiniert werden kann. Hierzu besitzt das Kernteil eine Axialbohrung, durch die der Schaft des Bohrers gesteckt werden kann. Die Befestigung des Kernteils am Schaft des Bohrers erfolgt mittels einer Madenschraube. Hierzu besitzt das Kernteil eine mit einem Innengewinde versehene Radialbohrung, in die eine Madenschraube eingedreht werden kann. Diese Radialbohrung befindet sich bevorzugt in einem zylindrischen Abschnitt des Befestigungsabschnittes. Dieser zylindrische Abschnitt ist durchmesservergrößert, so dass mehrere Gewindegänge ausgebildet werden können. In einer Weiterbildung der Erfindung ist das Werkzeug als Schraubwerkzeughalter ausgebildet. Das Kernteil besitzt auch hier einen Einspannschaft. Dieser ist von einer Metallhülse umgeben, innerhalb welcher der Schaft befestigt ist und sich ein Magnet befindet. Der Magnet bildet den Boden einer Sechskanthöhlung, in die ein Sechskantabschnitt des Bits eingesteckt werden kann. Auf die Außenmantelfläche des diese Höhlung ausbildenden Bauteils ist ein Außengewinde aufgedreht. Auf dieses Außengewinde ist die Stellhülse samt an ihr befestigter Anschlaghülse aufgeschraubt. Die axiale Fixierung erfolgt hier vorzugsweise nicht mit einer Madenschraube, sondern mit einer Kontermutter, die ebenfalls auf das Außengewinde aufgedreht ist. Bevorzugt liegt zwischen Kontermutter und Anschlaghülse ein Gummiring.

Das in den verschiedenen Varianten ausführbare erfindungsgemäße Werkzeug zeichnet sich durch eine besondere Anschlaghülse aus. Letztere braucht nicht aus einem durchsichtigen Material gefertigt zu sein. Auch wenn die Anschlaghülse aus einem undurchsichtigen Material gefertigt ist, bildet sich im drehangetriebenen Betriebszustand eine Zylinderzone aus, die zufolge der schnellen Drehung durchsichtig erscheint. Durch diese durchsichtige Axialzone ist ein freier Blick auf den Arbeitsabschnitt möglich.

In einer Weiterbildung der Erfindung ist vorgesehen, dass der Arbeitsabschnitt und der Befestigungsabschnitt voneinander trennbar sind. Der Arbeitsabschnitt ist bei dieser Variante bevorzugt als Senker ausgebildet. Sind die Schneidkanten des Senkers verschlissen, so braucht lediglich der Kopf, der den Arbeitsabschnitt bildet, ausgetauscht zu werden. Dieser Kopf besitzt eine Axialhöhlung, in die der Schaft eines Bohrers eingesteckt ist. Der Schaft des Bohrers kann mit einem Befestigungsmittel fest mit dem Arbeitsabschnitt verbunden werden. Zur axialen Fixierung des Schaftes des Bohrers innerhalb der Axialhöhlung wird bevorzugt eine in Radialrichtung in den Arbeitsabschnitt einschraubbare Madenschraube verwendet. Ein rückwärtiger Abschnitt des Arbeitsabschnittes bildet einen Mehrkantschaft. Bevorzugt handelt es sich hier um einen axial durchbohrten Sechskantabschnitt. Dieser Sechskantabschnitt steckt in einer entsprechend gestalteten Höhlung des Befestigungsabschnitts. Der Boden dieser Höhlung setzt sich in Form einer Axialhöhlung fort zur Aufnahme des Schaftes des Bohrers. Der Sechskantabschnitt kann in bekannter Weise in der Höhlung axial fixiert werden. Beispielsweise kann in einer Ringnut der Höhlung ein Federring einliegen, der den Sechskantabschnitt hält. Es ist aber auch vorgesehen, zur Halterung eine Kugel oder einen Magneten zu verwenden.

Um zu vermeiden, dass die Anschlaghülse sich während des Betriebes von der Stellhülse löst, besitzt eine alternativ gestaltete Anschlaghülse einen radial einwärts gerichteten Kragen, der in einer Ringnut der Stellhülse einliegt. Der Boden der Ringnut wird vom Haltefortsatz gebildet. Eine Wandung der Ringnut wird von einem Kragen eines Pressrings gebildet, der in eine Öffnungserweiterung der Stellhülse eingepresst ist. In einer Weiterbildung der Erfindung ist vorgesehen, dass der Randbereich der Anschlaghülse, die gegen die Oberfläche des Werkstücks tritt, aus einem Weichmaterial besteht. Diese Weichzone kann von einem weichen Lack oder einem weichen Kunststoffteil ausgebildet sein. Hierzu kann die Anschlaghülse auch in einem Zweikomponentenspritzgussverfahren hergestellt werden. Die Stellhülse kann im einfachsten Fall unmittelbar auf dem Schaft eines Bohrers fixiert werden. Hierzu ist lediglich eine Madenschraube erforderlich, die in eine entsprechende Gewindequerbohrung der Stellhülse eingeschraubt ist. In einer bevorzugten Ausgestaltung der Erfindung ist der zum Werkstück weisende Rand der Anschlaghülse mit einer Weichstoffzone, beispielsweise aus Gummi oder Kunststoff, versehen. Diese Weichstoffzone tritt gegen die Oberfläche des Werkstücks. Da sie weich ist und insbesondere einen geringen Reibwiderstand zur Werkstückoberfläche besitzt, wird das Werkstück nicht beschädigt. In einer bevorzugten Ausgestaltung wird die Weichstoffzone von einem Ring ausgebildet. Letzterer kann eine Nut aufweisen, in die der Rand der Stellhülse eingesteckt ist.

Ausführungsbeispiele der Erfindung werden nachfolgend anhand beigefügter Zeichnungen erläutert. Es zeigen:
- Fig. 1: die Seitenansicht eines ersten Ausführungsbeispiels,
- Fig. 2: die Unteransicht eines ersten Ausführungsbeispiels,
- Fig. 3: eine perspektivische Darstellung des ersten Ausführungsbeispiels im nicht drehangetriebenen Zustand,
- Fig. 4: eine perspektivische Darstellung des ersten Ausführungsbeispiels im drehangetriebenen Zustand, in dem sich ein den Arbeitsabschnitt übergreifender quasi transparenter Axialabschnitt ausbildet,
- Fig. 5: einen Schnitt gemäß der Linie V-V in Fig. 1,

- Fig. 6: einen Schnitt gemäß der Linie VI-VI in Fig. 1,
- Fig. 7: eine Explosionsdarstellung der Teile des ersten Ausführungsbeispiels,
- Fig. 8: einen Schnitt ähnlich dem Schnitt gemäß Fig. 6 eines zweiten Ausführungsbeispiels,
- Fig. 9: einen Schnitt ähnlich dem Schnitt der Fig. 6 eines dritten Ausführungsbeispiels,
- Fig. 10: eine perspektivische Darstellung eines vierten Ausführungsbeispiels in Form eines Senkers,
- Fig. 11: einen Schnitt gemäß der Linie XI-XI in Fig. 10,
- Fig. 12: einen Schnitt durch eine Stellhülse mit zugeordneter Anschlaghülse eines weiteren Ausführungsbeispiels,
- Fig. 13: in einer Schnittdarstellung ein weiteres Ausführungsbeispiel einer mit einer Anschlaghülse versehenen Stellhülse,
- Fig. 14: in perspektivischer Darstellung die Stellhülse nebst Anschlaghülse gemäß Fig. 13, montiert auf ein Kernteil, und
- Fig. 15: in einer geschnittenen Darstellung das Zusammenwirken des Werkzeugs gemäß Fig. 14 mit einem Werkstück.

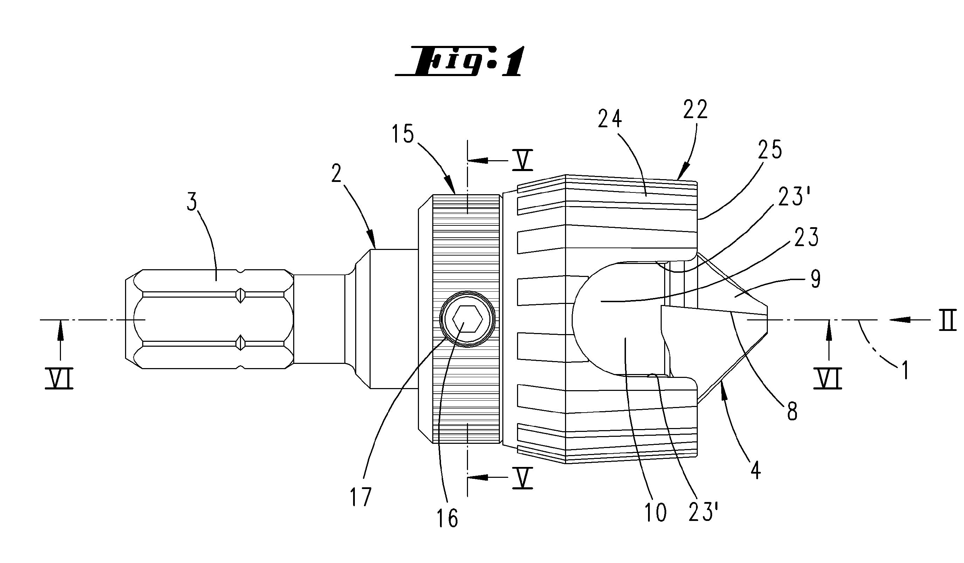

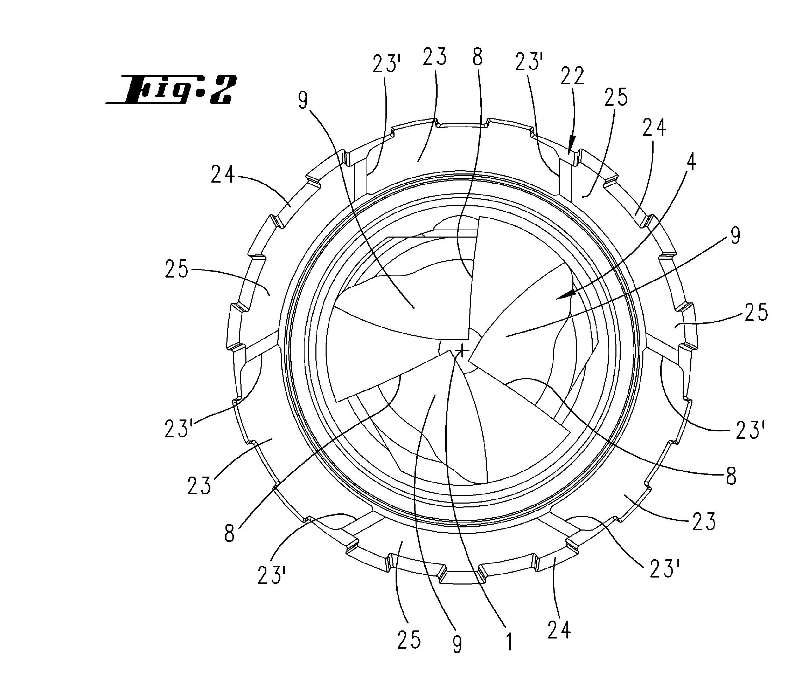

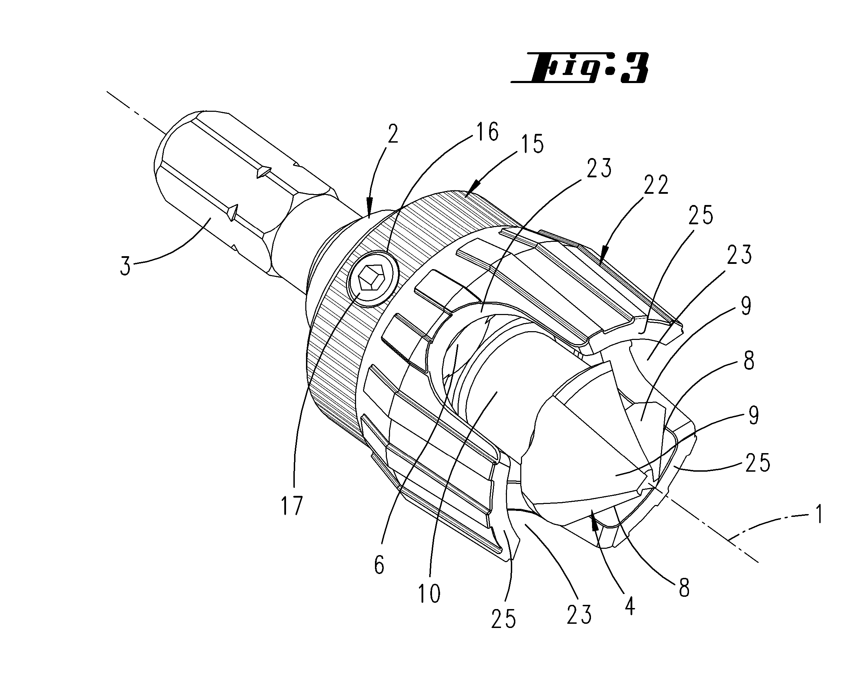

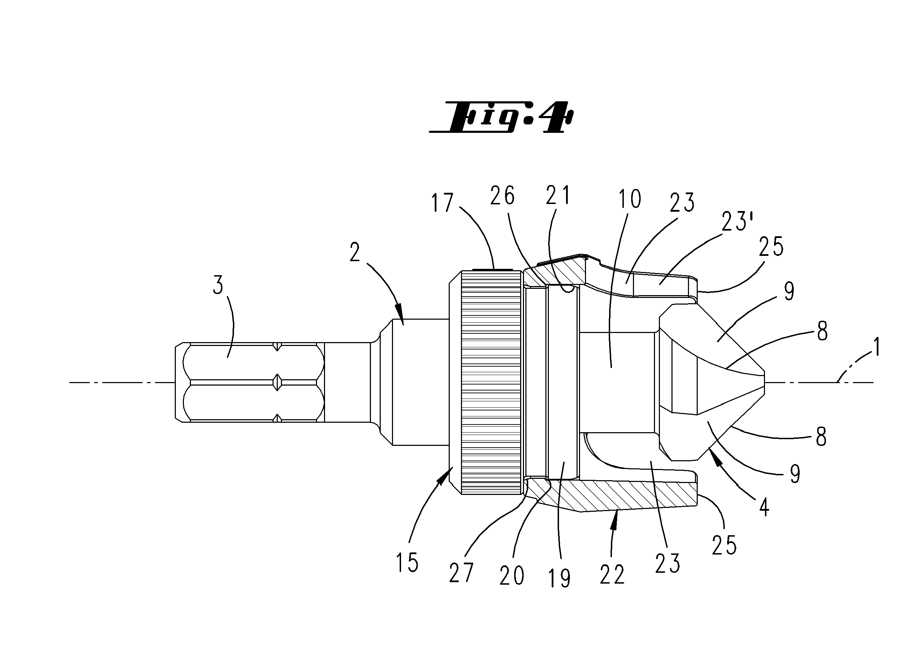

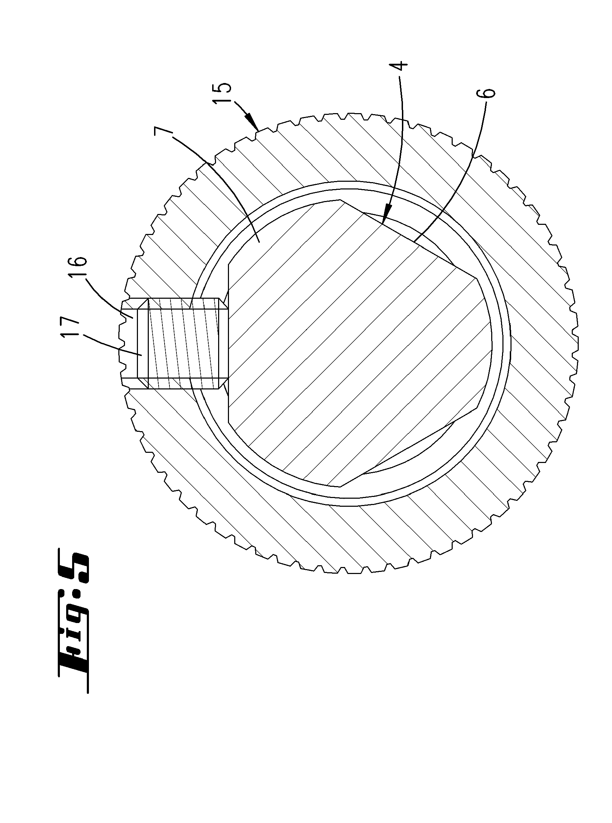

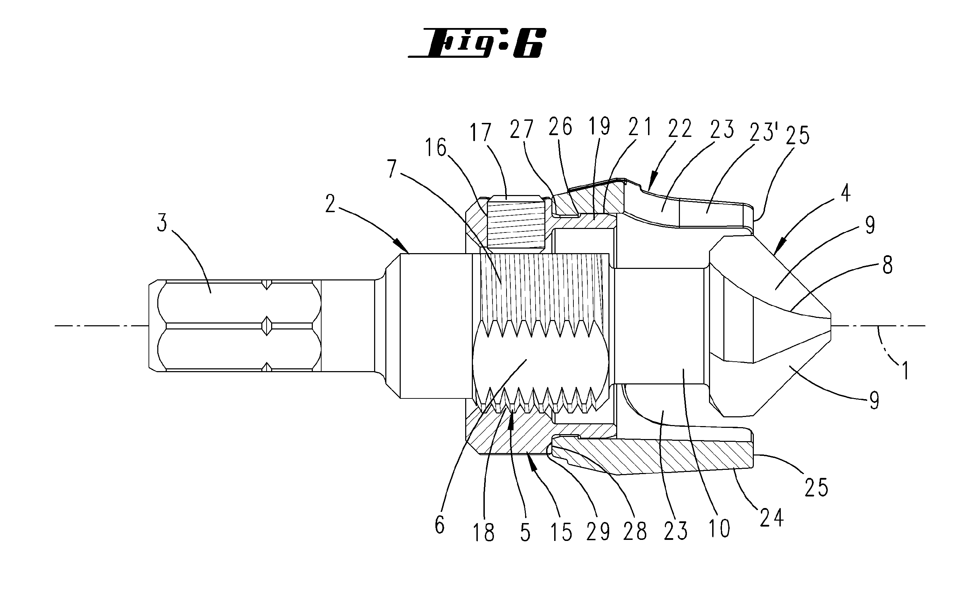

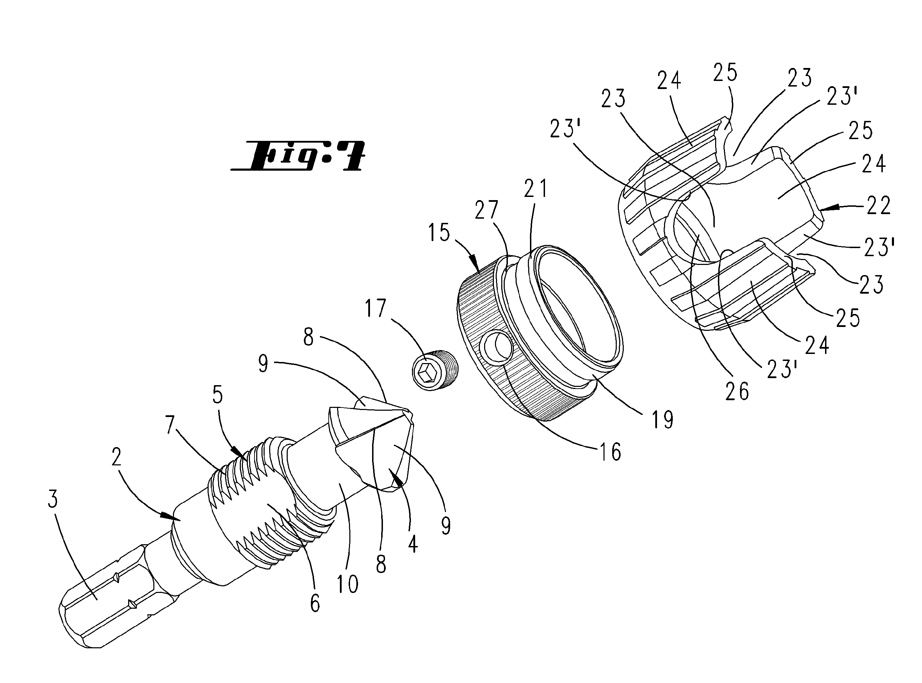

Bei dem in den Figuren 1 - 6 dargestellten Ausführungsbeispiel handelt es sich um einen Senker. Der Senker besteht aus einem Kernteil 2, welches um eine Drehachse 1 drehbar ist. Zum Drehantrieb besitzt das Kernteil 3 einen Antriebsabschnitt 3. Dieser ist als Sechskantschaft ausgebildet. Der Antriebsabschnitt 3 wird von einem axialen Ende des Kernteils 2 ausgebildet. Das andere axiale Ende des Kernteils 2 bildet einen Arbeitsabschnitt 4 aus. Bei dem in den Figuren 1 - 7 dargestellten Ausführungsbeispiel wird der Arbeitsabschnitt 4 von insgesamt 3 Schneidkanten 8 ausgebildet, die sich in einer Spitze treffen und ansonsten auf der Mantelfläche eines Kegels verlaufen. Zwischen den drei Schneidkanten 8 erstrecken sich Spankehlen 9. Dem derart ausgebildeten Senkerkopf 4 ist in axialer Richtung ein durchmesserverminderter Halsabschnitt 10 beabstandet. Axial beabstandet vom Halsabschnitt 10 ist ein Befestigungsabschnitt 5.

Der Befestigungsabschnitt 5 bildet den durchmessergrößten Bereich des Kernteils 2 und trägt ein Außengewinde 7. Das Außengewinde ist von insgesamt drei Abflachungen 6 unterbrochen, wobei sich die Abflachungen 6 entlang der Seiten eines gleichseitigen Dreiecks erstrecken, welches in der Querschnittsebene des Kernteils 2 liegt. Rückwärtig des Außengewindes 7 befindet sich ein durchmesserverminderter Zylinderabschnitt 11, der unter Ausbildung einer Kegelstumpfzone in den bereits erwähnten Antriebsabschnitt 3 übergeht.

Eine Stellhülse 15, die aus Messing gefertigt ist, besitzt ein Innengewinde 18, welches auf das Außengewinde 7 aufgeschraubt werden kann. Im Bereich des Innengewindes 18 besitzt die Stellhülse 15 eine Radialbohrung 16, die ein Innengewinde aufweist. In diese Radialbohrung 16 ist eine Madenschraube 17 eingeschraubt, deren Spitze gegen eine der Abflachungen 6 gedreht werden kann.

An den Gewindeabschnitt der Stellhülse 15 schließt sich auf der zum Arbeitsabschnitt 4 hinweisenden Seite ein rohrförmiger Haltefortsatz 19 an. Dieser Haltefortsatz 19 besitzt stirnseitig eine Schräge 21 und bildet davon beabstandet eine Stufe 20 aus, der ein Absatz 29 gegenüberliegt. Insgesamt bildet der Haltefortsatz 19 eine Ringausnehmung aus, auf die ein Befestigungsabschnitt einer Anschlaghülse 22 aufgesteckt werden kann.

Die Anschlaghülse 22 besteht aus einem nicht-durchsichtigen Kunststoff. Sie besitzt eine zylinderförmige Wandung 24, die von Fenstern 23 unterbrochen ist. Der in Richtung des Arbeitsabschnittes 4 hinweisende Rand 25 der Anschlaghülse 22 besitzt insgesamt drei Einschnitte, die die besagten Fenster 23 ausbilden. Der Rand 23' jedes Fensters 23 verläuft auf einer im Wesentlichen U-förmigen Konturlinie. Die Umfangsweite jedes der im gleichmäßiger Umfangsverteilung angeordneten drei Fenster ist etwa so groß, wie die Umfangsweite der Fensterzwischenräume des zylindrischen Abschnittes 24. Anstelle von drei Fenstern können aber auch vier oder mehr Fenster vorgesehen sein.

Die dem Rand 25 gegenüberliegende Stirnseite 28 der Anschlaghülse 22 liegt im montierten Zustand vor dem Absatz 29. In diesem Bereich bildet die Anschlaghülse 22 eine Rastschulter 26 aus, die vor der Stufe 20 liegt. Eine Schräge 27, die der Stirnseite 28 benachbart ist, wirkt zusammen mit der Schräge 21 als Montagehilfe, wenn die Anschlaghülse 22 auf den Haltefortsatz 19 aufgepresst wird. Sie sitzt dort in einem rastgesicherten, festen Klemmsitz. Die Anschlaghülse 22 ist unverlierbar am Haltefortsatz 19 formschlüssig befestigt.

Die Anschlaghülse 22 ist jedoch in Umfangsrichtung derart reibschlüssig mit der Stellhülse 15 verbunden, dass sie von der Stellhülse 15 drehmitgeschleppt werden kann. Stößt der Rand 25 der Anschlaghülse 22 gegen ein Werkstück, so wird die Drehbewegung der Anschlaghülse 22 gehemmt. Dies kann bis zum Stillstand der Anschlaghülse 22 erfolgen. Da die Rastverbindung zwischen Anschlaghülse 22 und Stellhülse 15 eine relative Verdrehung beider Teile erlaubt, kann die Stellhülse 15 weiterdrehen. Zufolge der Verbindung der Stellhülse 15 über die Madenschraube 17 mit dem Kernteil 2 ist die Stellhülse 15 drehfest mit dem Kernteil 2 verbunden. Die Anschlaghülse 22 ist über die rotationssymmetrische Formschlussverbindung aber grundsätzlich auch drehbar mit der Stellhülse 15 verbunden.

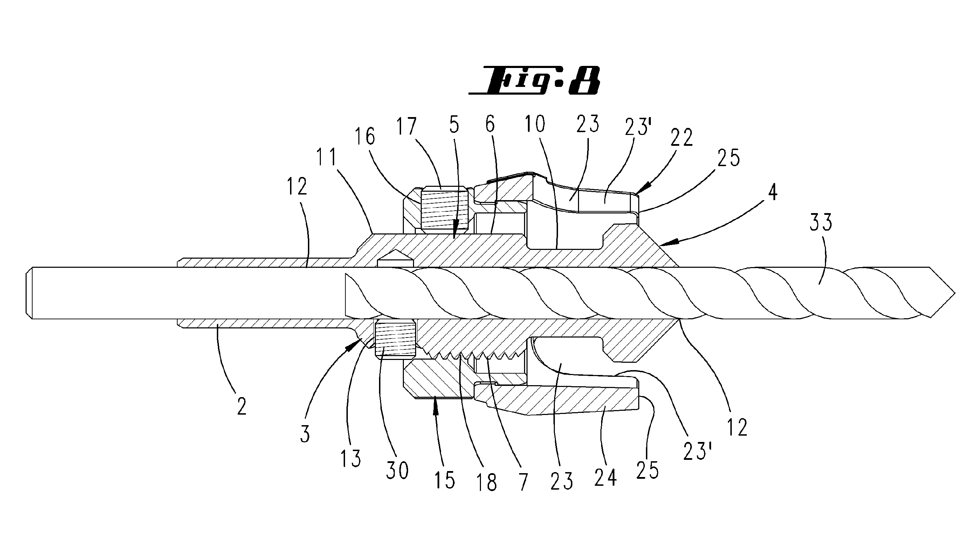

Das in der Fig. 8 dargestellte zweite Ausführungsbeispiel unterscheidet sich vom ersten Ausführungsbeispiel im Wesentlichen lediglich dadurch, dass das Kernteil 2 eine Axialbohrung 12 aufweist. In dieser Axialbohrung 12 ist ein Bohrer 33 eingesteckt. Der Bohrer wird mittels einer Madenschraube 30 gehalten, die in eine Gewindebohrung 13 des Antriebsabschnittes 3 des Kernteils 2 eingeschraubt ist. Die Gewindebohrung 13 befindet sich in dem oben beschriebenen durchmessergrößeren Zylinderabschnitt 11. Die Spitze der Madenschraube 30 verklemmt sich mit der Außenwandung des Schaftes des Bohrers 33, so dass das Kernteil 2 drehfest mit dem Bohrer 33 verbunden ist.

Auch bei diesem Ausführungsbeispiel lässt sich die axiale Lage der Stellhülse 15 gegenüber dem Kernteil 2 dadurch einstellen, dass die Madenschraube 17 gelöst und anschließend die Stellhülse 15 relativ gegenüber dem Außengewinde 7 gedreht wird. Einhergehend damit wird auch die die Eintauchtiefe des Senkerkopfes 4 definierende Randkante 25 der Anschlaghülse 22 in Achsrichtung verlagert.

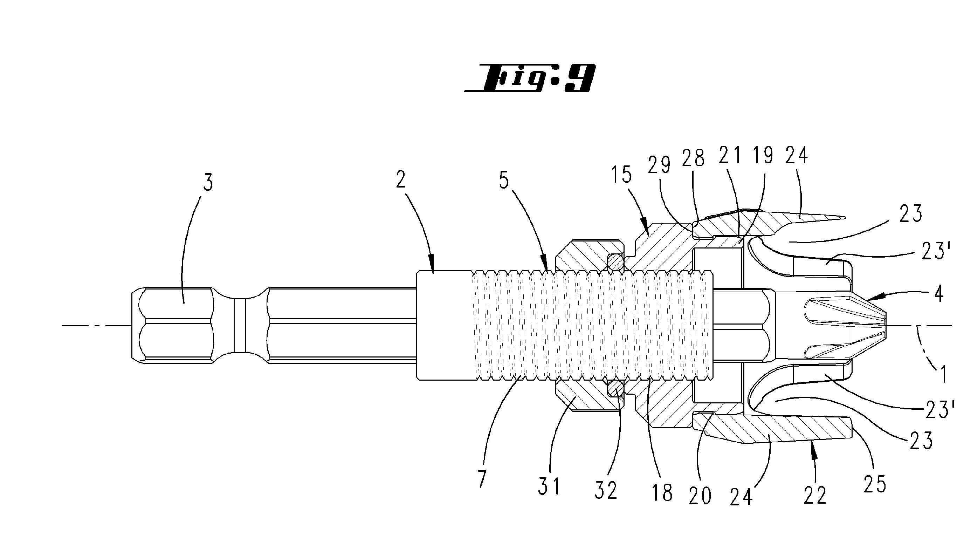

Das in der Fig. 9 dargestellte dritte Ausführungsbeispiel ist als Bithalter zeichnerisch dargestellt. Stellhülse 15 und Anschlaghülse 22 entsprechen im Wesentlichen den mit denselben Bezugsziffern bezeichneten Bauteilen der beiden zuvor beschriebenen Ausführungsbeispiele. Anders als dort wird die Stellhülse 15 aber mit einer Kontermutter 31 gehalten, die auf das Außengewinde 7 aufgeschraubt ist. Zwischen Kontermutter 31 und Stirnrandkante der Stellhülse 15 ist ein Gummiring 32 angeordnet, der sich beim Aufschrauben der Kontermutter 31 gegen die Stellhülse 15 elastisch verformt.

Das Kernteil 2 wird von einem Bithalter ausgebildet, wie er beispielsweise von der DE 199 07 837 A1 beschrieben ist. Innerhalb des Kernteils 2 befindet sich ein Magnet. Letzterer bildet den Boden einer Sechskant-Einstecköffnung für den den Arbeitsabschnitt 4 ausbildenden Bit 4.

Auch bei dieser Ausgestaltung ist bei sich drehendem Werkzeug ein unbeschränkter Blick auf den Arbeitsabschnitt 4, also auf den Bit möglich. Auch bei diesem Ausführungsbeispiel bildet der Rand 25 der Anschlaghülse 22 einen Tiefenanschlag. Seine axiale Lage bezogen auf den Bit 4 definiert die Einschraubtiefe einer Schraube.

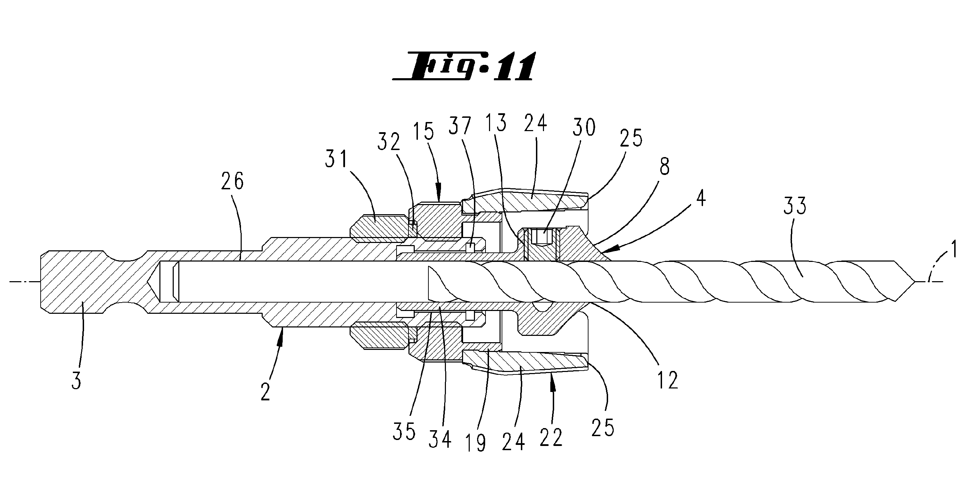

Anstelle des Bits kann in die Sechskanthöhlung des in der Fig. 9 dargestellten Halters aber auch ein Senker eingesteckt werden, wie es die Fig. 11 zeigt. Dort wird der Arbeitsabschnitt 4 nicht von einem Bit, sondern von einem Senkerkopf ausgebildet, der Schneidkanten 8 ausbildet. Der Senkerkopf besitzt einen rückwärtigen Sechskantabschnitt 34, der in einer entsprechend ausgebildeten Sechskantbohrung des Befestigungsabschnittes 5 steckt. Hierdurch ist es möglich, verschieden gestaltete Senkerköpfe mit dem Befestigungsabschnitt zu verbinden. Die Höhlung 35 kann eine Ringnut 37 ausbilden, in der ein Klemmring einliegt, um den Sechskantabschnitt 34 reibschlüssig in der Höhlung 35 zu erhalten. Alternativ können auch Formschlussmittel, wie beispielsweise Kugeln vorgesehen sein, die sich in entsprechende Aussparungen des Sechskantabschnittes einlegen. Darüber hinaus ist es möglich, den Sechskantabschnitt 34 mittels eines Magneten in der Höhlung 35 zu halten.

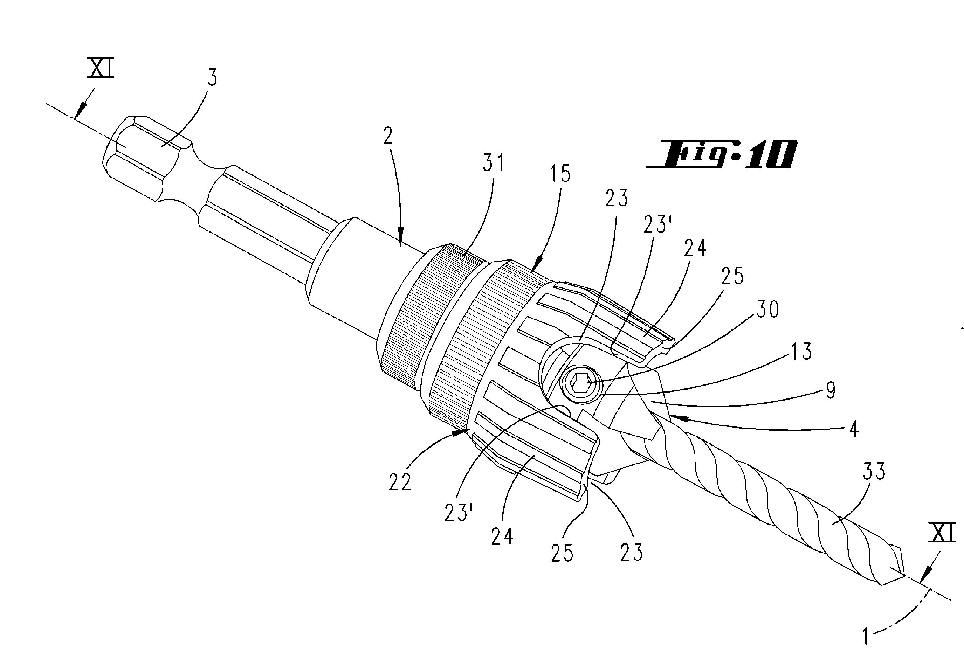

Bei dem in den Fig. 10 und 11 dargestellten vierten Ausführungsbeispiel besitzt der von einem Senker gebildete Arbeitsabschnitt 4 eine Axialhöhlung 12, in die ein Bohrer 33 eingesteckt werden kann. Zur axialen Fixierung des Bohrers 33 besitzt der Arbeitsabschnitt 4 eine Radialbohrung 13, in die eine Madenschraube 30 eingedreht ist, die gegen den Schaft des Bohrers 33 geschraubt werden kann. Die Axialhöhlung 12 fluchtet mit einer Axialhöhlung 36 des Befestigungsabschnittes 5 bzw. des Antriebsabschnittes 3. Diese zuletzt genannte Axialhöhlung 36 entspringt dem Boden der Mehrkanthöhlung 35 und ist als Sackbohrung ausgebildet. Sie kann jedoch auch als Durchgangsbohrung durch den Mehrkantabschnitt des Antriebsabschnittes 3 gebildet sein.

Zwischen der Stellhülse 15 und der Kontermutter 31 ist ein elastischer Ring 32 vorgesehen. Dieser kann wie beim zuvor erörterten Ausführungsbeispiel von einem Gummiring ausgebildet sein. Bevorzugt wird dieser Ring 32 aber von einem Kunststoffring gebildet, der mit einem radialen Abstand das Außengewinde 7 umgibt. Die Materialstärke des Rings kann etwa 3 mm betragen. Sein Innendurchmesser beträgt bevorzugt 10 mm, sein Außendurchmesser bevorzugt 15 mm. Der Ring kann aus Kunststoff, insbesondere Polyamid, bestehen, er kann aber auch aus Stahl, Messing oder Aluminium bestehen. Das in der Fig. 9 dargestellte Ausführungsbeispiel kann mit einem derartigen Ring ausgestattet sein.

Anstelle der in den Fig. 10 und 11 dargestellten Kontermutter 31 kann aber auch eine Madenschraube verwendet werden, um die Stellhülse 15 am Befestigungsabschnitt 5 zu fixieren.

Auch bei dem in den Fig. 1 bis 7 dargestellten Ausführungsbeispiel kann das Kernteil 2 mehrteilig ausgebildet sein. Auch dort kann der Arbeitsabschnitt 4 lösbar mit dem Befestigungsabschnitt 5 verbunden sein. Auch hier kann zur Verbindung des Arbeitsabschnittes 4 mit dem Befestigungsabschnitt 5 eine Sechskantsteckverbindung vorgesehen sein. Es ist aber auch möglich, hier eine Schraubverbindung vorzusehen.

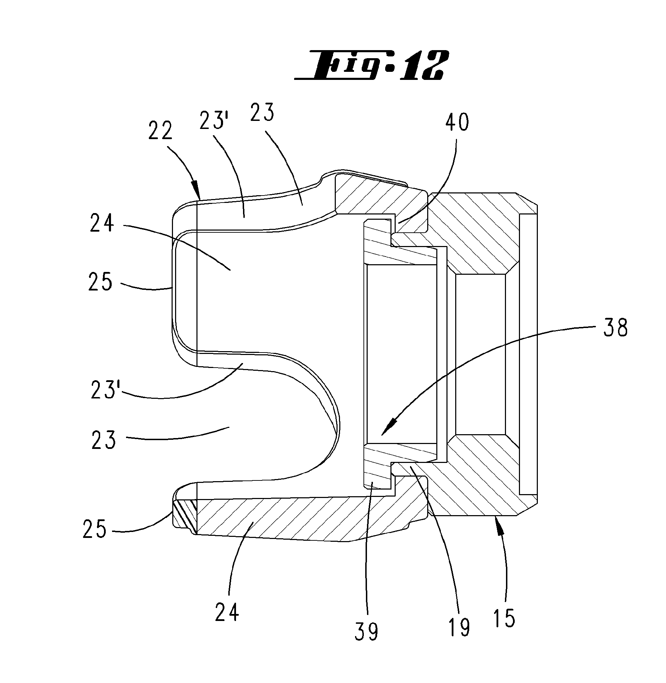

Die Fig. 12 beschreibt ein weiteres Ausführungsbeispiel einer Stellhülse 15 und einer damit verbundenen Anschlaghülse 22. Die Anschlaghülse besitzt an ihrem zum Werkstück weisenden Rand 25 eine Weichzone. Diese Weichzone kann von einem dort angespritzten weicheren Kunststoff gebildet sein. Es ist auch möglich, dass die Weichzone von einem formschlüssig mit dem Rest des Körpers der Anschlaghülse 22 verbundenen Formteil gebildet ist. Die Weichhülse kann aber auch von einem Lack ausgebildet sein.

Bei diesem Ausführungsbeispiel besitzt die Anschlaghülse 22 an ihrem, dem Rand 25 gegenüberliegenden Ende, mit welchem die Anschlaghülse 22 mit der Stellhülse 15 verbunden ist, einen radial einwärts ragenden Kragen 40. Der Kragen 40 greift in eine Ringnut der Stellhülse 15 ein. Der Boden der Ringnut wird von dem Haltefortsatz 19 ausgebildet. Wesentlich ist ein in die Öffnung der Stellhülse 15 eingepresster Pressring 38. Dieser bildet einen Kragen 39 aus, der die Wandung der oben genannten Ringnut ausbildet. Zufolge dieser Ausgestaltung ist die Anschlaghülse 22 formschlüssig und permanent mit der Stellhülse 15 verbunden. Die Verbindung löst sich auch dann nicht, wenn sich die Anschlaghülse 22 während des Betriebes erwärmt.

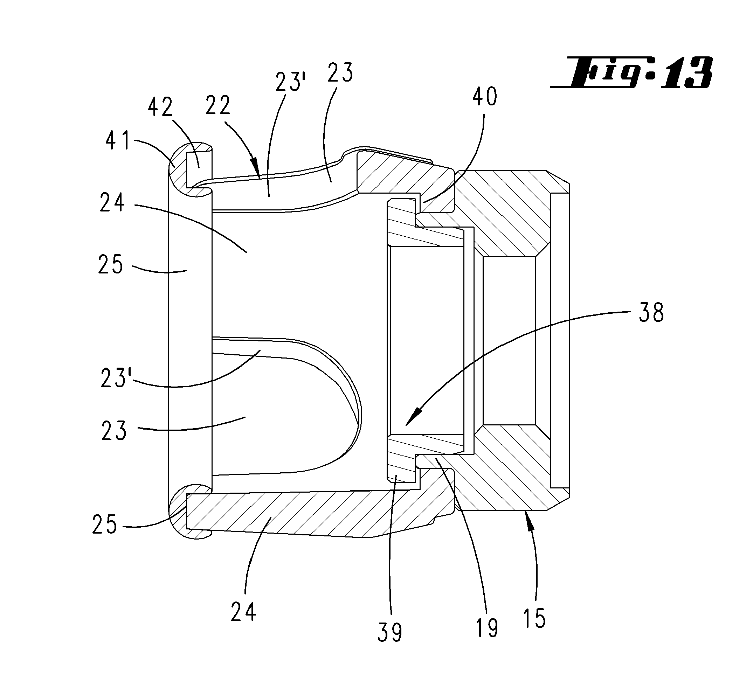

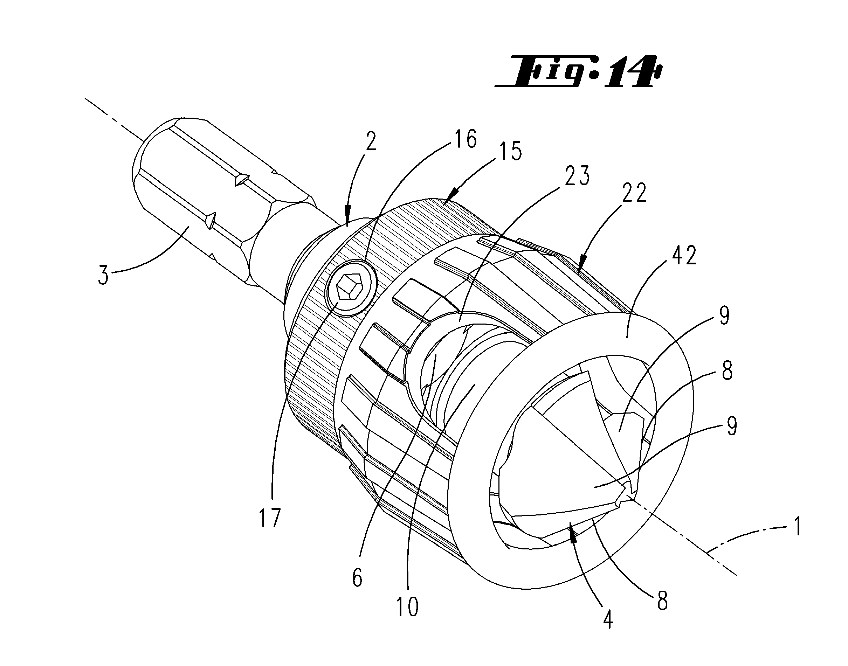

Bei dem in den Figuren 13 bis 15 dargestellten Ausführungsbeispiel steckt der Rand 25 der Stellhülse 22 in einer umlaufenden Nut 42 eines Ringes 41. Der Ring kann aus Gummi, Teflon oder aus einem anderen geeigneten Material beispielsweise Kunststoff bestehen. Bevorzugt ist das Material des Ringes 41 weich. Besonders bevorzugt besitzt der Ring aber eine Oberfläche, die nur einen geringen Reibwiderstand zur Oberfläche des Werkstücks 44 entfaltet. Der Rand 25 kann mit dem Boden der Nut 42 verklebt sein. Er kann aber auch mit einem geringen Übermaß gefertigt sein, so dass er in einer Klemmverbindung in der Nut 42 steckt.

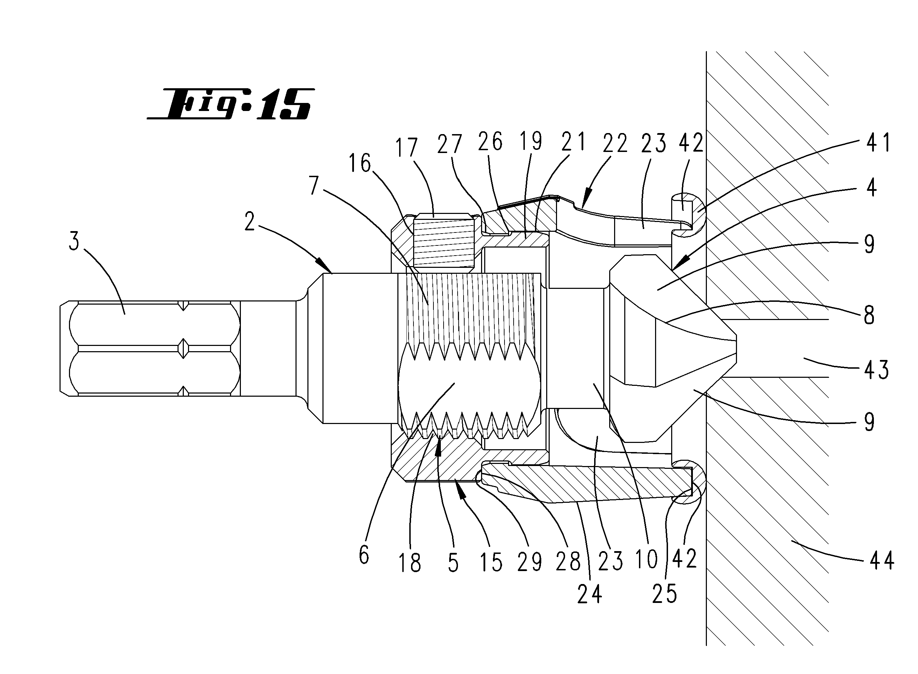

Die Fig. 15 zeigt eine typische Betriebsstellung. Der Arbeitsabschnitt 4 ist als Senker ausgebildet. Mit dem Senker 4 ist eine Senkung in eine Bohrung 43 eingebracht worden. Die zur Stirnseite des Ringes 41 weisende Oberfläche des Rings 41 liegt in berührender Anlage an der Oberfläche des Werkstückes 44. Da die Oberfläche des Ringes 41 weich ist und nur eine geringe Reibung entfaltet, entstehen keine unschönen Abdrücke auf der Werkstückoberfläche.

Bei dem zuletzt genannten Ausführungsbeispiel ist die Stellhülse 15 mit einem Gewinde am Kernteil 2 fixiert. Bei diesem und bei dem zuvor beschriebenen Ausführungsbeispiel ist dies von Vorteil. Es ist aber auch vorgesehen, bei allen Ausführungsbeispielen auf die Gewindeverbindung zu verzichten und die Stellhülse 15 lediglich am Kernteil zu verklemmen, bspw. mittels einer radial einschraubbaren Madenschraube.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Drehantreibbares Werkzeug, mit einem um eine Drehachse (1) drehantreibbaren Kernteil (2), welches an einem axialen Ende einen Antriebsabschnitt (3) und am anderen axialen Ende einen Arbeitsabschnitt (4) und einen zwischen diesen Abschnitten (3, 4) angeordneten Befestigungsabschnitt (5) für eine Stellhülse (15) aufweist, die mittels eines Feststellorgans (17, 31) in unterschiedlichen Axialstellungen am Kernteil (2) befestigt ist und die an ihrer zum Arbeitsabschnitt (4) hinweisenden Seite eine im Wesentlichen zylindrische Wandung (24) aufweisende Anschlaghülse (22) trägt, die bereichsweise den Arbeitsabschnitt (4) übergreift und sich mit dem drehenden Kernteil (2) mitdreht, **dadurch gekennzeichnet, dass** die Wandung (24) der Anschlaghülse (22) ein oder mehrere Fenster (23) aufweist, wobei das Fenster bei sich drehender Anschlaghülse (22) eine einen freien Blick auf den Arbeitsabschnitt (4) erlaubende, durchsichtige Axialzone erscheinen lässt.

2. Werkzeug nach Anspruch 1 oder insbesondere danach, **dadurch gekennzeichnet, dass** das ein oder mehrere Fenster (23) zu dem Arbeitsabschnitt (4) zugeordneten Rand der Anschlaghülse (22) hin randoffen ist und insbesondere der Rand (23') des mindestens einen Fensters (23) auf einer U-förmigen Konturlinie verläuft.

3. Werkzeug nach einem oder mehreren der vorhergehenden Ansprüche oder insbesondere danach, **gekennzeichnet durch** mehrere, insbesondere drei in gleichmäßiger Winkelverteilung um die Drehachse (1) angeordnete Fenster (23), wobei die Umfangsweite der Fenster (23) im Wesentlichen der Umfangsweite der Fensterzwischenräume entspricht.

4. Werkzeug nach einem oder mehreren der vorhergehenden Ansprüche oder insbesondere danach, **dadurch gekennzeichnet, dass** die Anschlaghülse (22) gegenüber der Stellhülse (15) drehbar ist.

5. Werkzeug nach einem oder mehreren der vorhergehenden Ansprüche oder insbesondere danach, **dadurch gekennzeichnet, dass** die aus Kunststoff gefertigte Anschlaghülse (22) auf einen rohrförmigen Haltefortsatz (19) der Stellhülse (15) aufgepresst ist und die Stellhülse (15) mittels einer Madenschraube (17) drehgesichert ist und/oder der Befestigungsabschnitt (5) ein Außengewinde (7) aufweist, auf welches ein Innengewinde (18) der Stellhülse (15) aufgeschraubt ist.

6. Werkzeug nach einem oder mehreren der vorhergehenden Ansprüche oder insbesondere danach, **dadurch gekennzeichnet, dass** der Befestigungsabschnitt (5) in Achsrichtung verlaufende Abflachungen (6) ausbildet, welche insbesondere auf den Seiten eines gleichseitigen Vielecks, insbesondere eines gleichseitigen Dreiecks, verlaufen.

7. Werkzeug nach einem oder mehreren der vorhergehenden Ansprüche oder insbesondere danach, **dadurch gekennzeichnet, dass** der Arbeitsabschnitt (4) von Schneiden (8) gebildet ist.

8. Werkzeug nach einem oder mehreren der vorhergehenden Ansprüche oder insbesondere danach, **dadurch gekennzeichnet, dass** das Werkzeug ein Senker ist.

9. Werkzeug nach einem oder mehreren der vorhergehenden Ansprüche oder insbesondere danach, **gekennzeichnet durch** eine axiale Öffnung (12) zum Einstecken eines Bohrers (33), wobei insbesondere der Bohrer (33) mit einer Madenschraube (30) axial an das Kernteil (2) gefesselt ist, wobei die Madenschraube (30) in eine Gewindebohrung (13) eingeschraubt ist, die sich in einem dem Antriebsabschnitt (3) zugeordneten Zylinderabschnitt (11) befindet.

10. Werkzeug nach einem oder mehreren der vorhergehenden Ansprüche oder insbesondere danach, **dadurch gekennzeichnet, dass** das Werkzeug ein Schraubwerkzeughalter ist.

11. Werkzeug nach einem oder mehreren der vorhergehenden Ansprüche oder insbesondere danach, **dadurch gekennzeichnet, dass** die Fesselung der Stellhülse (15) mit einer Kontermutter (31) erfolgt zwischen Kontermutter (31) und Stellhülse (15) ein Ring (32) aus Gummi, Kunststoff oder Metall angeordnet ist.

12. Drehantreibbares Werkzeug, mit einem um eine Drehachse (1) drehantreibbaren Kernteil (2), welches an einem axialen Ende einen Antriebsabschnitt (3) und am anderen axialen Ende einen Arbeitsabschnitt (4) und einen zwischen diesen Abschnitten (3, 4) angeordneten Befestigungsabschnitt (5) für eine Stellhülse (15) aufweist, die mittels eines Feststellorgans (17, 31) in unterschiedlichen Axialstellungen am Kernteil (2) befestigt ist und die an ihrer zum Arbeitsabschnitt (4) hinweisenden Seite eine im Wesentlichen zylindrische Wandung (24) aufweisende Anschlaghülse (22) trägt, die bereichsweise den Arbeitsabschnitt (4) übergreift und sich mit dem drehenden Kernteil (2) mitdreht, **dadurch gekennzeichnet, dass** der Arbeitsabschnitt (4) von einem Senker mit Schneiden (8) ausgebildet ist, der axialfest mit einem in einer Axialhöhlung (12) eingesteckten Bohrer (33) verbindbar ist und lösbar mit dem Befestigungsabschnitt (5) verbunden ist.

13. Werkzeug nach Anspruch 12, oder insbesondere danach, **dadurch gekennzeichnet, dass** der Arbeitsabschnitt (4) einen Mehrkantschaft (34) ausbildet, der in einer formangepassten Höhlung (35) des Befestigungsabschnittes (5) einsteckt der Boden der Höhlung (35) eine Axialhöhlung (36) ausbildet zur Aufnahme des Schaftes des Bohrers (33).

14. Werkzeug nach einem oder mehreren der vorhergehenden Ansprüche, oder insbesondere danach, **dadurch gekennzeichnet, dass** der Arbeitsabschnitt (4) mittels einer Madenschraube (30) am Schaft des Bohrers (33) befestigt ist und der Mehrkantabschnitt (34) reibschlüssig über Magnetkraft oder formschlüssig in der Höhlung (35) gehalten ist.

15. Werkzeug nach einem oder mehreren der vorhergehenden Ansprüche, **dadurch gekennzeichnet, dass** der zum Werkstück (44) weisende Rand (25) der Anschlaghülse (22) eine Weichstoffzone ausbildet, welche insbesondere von einem Ring (41) ausgebildet ist, der am Rand (25) der Anschlaghülse (22) befestigt ist und hierzu insbesondere eine Einstecköffnung (42) aufweist, in welche der Rand (25) bzw. Abschnitte des Randes (25) eingesteckt sind.
